# EUROPEAN PATENT APPLICATION

(11) **EP 4 606 566 A1**
(43) Date of publication of application: **27.08.2025**
(21) Application number: 23879876.3
(22) Date of filing: 19.10.2023
(51) Int. Cl.: B32B 15/08, B32B 15/085

(54) **LAMINATE**

(30) Priority: 19.10.2022 JP 2022167988
(71) Applicant: Mitsubishi Chemical Corporation, Tokyo 100-8251 (JP); Mitsubishi Chemical Advanced Materials Japan Ltd., Tokyo 103-0021 (JP)
(72) Inventor: KITA, Hijiri, Yokkaichi-shi, Mie 510-0051 (JP); SATO, Fumiharu, Yokkaichi-shi, Mie 510-0051 (JP); MATSUI, Jun, Tokyo 100-8251 (JP); TAKATA, Nobuaki, Tokyo 100-8251 (JP)
(74) Representative: Vossius & Partner Patentanwälte Rechtsanwälte mbB
(86) International application number: PCT/JP2023/037887
(87) International publication number: WO 2024/085233

(57) **Abstract**

Provided is a laminate including: a layer (A) in which a thermoplastic resin composition (X) and inorganic fibers (Y) are integrated; and a layer (B) having a higher thermal conductivity in the thickness direction than the layer (A), in which the thermoplastic resin composition (X) contains a thermoplastic resin (a) and a thermally expandable flame retardant (b1). It is possible to provide a laminate having high flame shielding property.

## Description

### Technical Field

The present invention relates to a laminate, and more particularly to a laminate having flame shielding property.

### Background Art

In recent years, as part of environmental measures, research and development of electric vehicles and hybrid vehicles have been advanced, and development of high energy density batteries and weight reduction for the purpose of improving cruising distances have been actively advanced. Such a high energy density battery may catch fire due to an unexpected accident, and its housing material is required to have high flame shielding property as a safety measure for passengers, and therefore, a metal material such as iron and a fire-resistant material are often used in combination.

However, the metal material has a drawback of being heavy, and when the refractory material is used in combination, there is a problem of an increase in cost due to an increase in processability and the number of parts. Therefore, resinification having a possibility of achieving both weight reduction and flame shielding property has been attempted. At present, for sustainable society, suppression of carbon dioxide and recyclability are becoming important. Many thermosetting materials have high flame retardancy and are common as composite materials. However, thermoplastic resin materials are advantageous in terms of recyclability.

Further, in China, a safety standard of GB 38031-2020 "Electric Vehicles Traction Battery Safety requirements" has been announced, and it is required to issue a warning five minutes before thermal runaway of the battery, but it is considered that this can also be achieved by a housing material that shields flame for five minutes or more after ignition of the battery.

To solve these problems, for example, PTL 1 proposes a carbon fiber-reinforced polypropylene resin to which a bromine-based flame retardant or an antimony oxide compound is added. However, the additive used here has a problem of biopersistence.

On the other hand, as a technique for imparting flame retardancy to a polypropylene-based resin in consideration of biopersistence, PTL 2 proposes a flame-retardant polyolefin-based composition in which a (poly)phosphate compound is contained in a polyolefin-based resin.

In addition, PTL 3 proposes a flame-retardant resin composition in which a glass long fiber and a phosphate compound are contained in a polypropylene resin.

### Citation List

### Patent Literature

PTL 1: JP 2014-62189 A
PTL 2: JP 2013-119575 A
PTL 3: JP 2011-88970 A

### Summary of Invention

### Technical Problem

As described above, the conventional technology has many insufficient points with respect to the resinification having the possibility of achieving both weight reduction and flame shielding property of a battery having a high energy density. Specifically, higher flame shielding performance is required.

The present invention has been made to solve the above problems, and an object of the present invention is to provide a laminate having a high flame shielding property.

### Solution to Problem

As a result of intensive studies to solve the above problems, the present inventors have found that a laminate including a layer (A) in which a thermoplastic resin composition (X) and inorganic fibers (Y) are integrated and a layer (B) having a higher thermal conductivity in the thickness direction than the layer (A) can solve the above problems, and have completed the present invention based on these findings.

That is, the present invention provides the following [1] to [16]. The aspects described in the following [1] to [16] may be referred to as a first aspect.
[1] A laminate including: a layer (A) in which a thermoplastic resin composition (X) and inorganic fibers (Y) are integrated; and a layer (B) having a higher thermal conductivity in the thickness direction than the layer (A), in which the thermoplastic resin composition (X) contains a thermoplastic resin (a) and a thermally expandable flame retardant (b1).
[2] The laminate according to [1], in which a thermal conductivity measured in a thickness direction of the laminate is 0.32 W/mK or more.
[3] The laminate according to [1] or [2], in which a thermal conductivity measured in a thickness direction of the layer (B) is 10 W/mK to 400 W/mK.
[4] The laminate according to any one of [1] to [3], in which the layer (B) is a metal layer.
[5] The laminate according to [4], in which the metal layer has a thickness of 0.05 to 2.0 mm.
[6] The laminate according to any one of [1] to [5], in which the thermoplastic resin composition (X) contains a polypropylene-based resin.
[7] The laminate according to any one of [1] to [6], in which the thermoplastic resin composition (X) contains a copolymer of an α-olefin and an unsaturated carboxylic acid.
[8] The laminate according to any one of [1] to [7], in which the thermally expandable flame retardant (b1) includes a phosphorus-based flame retardant.
[9] The laminate according to [8], in which the phosphorus-based flame retardant contains a compound having a melamine structure or a piperazine structure.
[10] The laminate according to any one of [1] to [9], in which the inorganic fibers (Y) include glass fibers.
[11] The laminate according to any one of [1] to [10], in which the mat made of the inorganic fibers (Y) is impregnated with the thermoplastic resin composition (X).
[12] The laminate according to any one of [1] to [11], in which the thermoplastic resin composition (X) contains zinc oxide.
[13] A method for producing a laminate, including a step of impregnating a mat made of inorganic fibers (Y) with a thermoplastic resin composition (X) to produce an integrated layer (A); and a step of laminating a layer (B) having a higher thermal conductivity in the thickness direction than the layer (A) on the integrated layer (A).
[14] The method for producing a laminate according to [13], in which the step of producing the integrated layer (A) includes laminating a mat made of inorganic fibers (Y) and a resin sheet made of a thermoplastic resin composition (X) and hot-pressing the laminate.
[15] The method according to [13] or [14], in which the layer (B) is a metal layer.
[16] A housing or casing using the laminate according to any one of [1] to [12].

In addition, a stampable sheet according to any one of the following [1'] to [11'] is also one aspect of the present invention. This aspect may be referred to as a second aspect.

Further, a laminate including a layer formed by molding the above-mentioned stampable sheet and a metal layer is also one aspect of the present invention (corresponding to the following [12'] to [22']).
[1'] A stampable sheet including a thermoplastic resin composition (X) and inorganic fibers (Y), in which the thermoplastic-resin composition (X) contains a thermally expandable flame retardant (b1), and the inorganic fibers (Y) include glass fibers.
[2'] The stampable sheet according to [1'], in which the thermally expandable flame retardant (b1) includes a phosphorus-based flame retardant.
[3'] The stampable sheet according to [2'], in which the phosphorus-based flame retardant contains a compound having a melamine structure or a piperazine structure.
[4'] The stampable sheet according to any one of [1'] to [3'], in which the mat made of the inorganic fibers (Y) is impregnated with the thermoplastic resin composition (X).
[5'] The stampable sheet according to any one of [1'] to [4'], in which the thermoplastic resin composition (X) contains zinc oxide.
[6'] The stampable sheet according to any one of [1'] to [5'], in which the thermoplastic resin composition (X) contains a thermoplastic resin (a) and a flame retardant or a flame retardant aid (b2) different from the thermally expandable flame retardant (b1), and a decomposition temperature of the flame retardant or the flame retardant aid (b2) is higher than a thermal expansion start temperature of the thermally expandable flame retardant (b1) by 10°C or higher.
[7'] The stampable sheet according to [6'], in which the flame retardant or the flame retardant aid (b2) is a non-thermally expandable flame retardant or a non-thermally expandable flame retardant aid (b2').
[8'] The stampable sheet according to [7'], in which the non-thermally expandable flame retardant or the non-thermally expandable flame retardant aid (b2') contains a metal hydroxide.
[9'] The stampable sheet according to any one of [6'] to [8'], in which the flame retardant or the flame retardant aid (b2) is a fluorine-based drip preventing agent.
[10'] The stampable sheet according to any one of [1'] to [9'], in which the thermoplastic resin composition (X) contains a copolymer of an α-olefin and an unsaturated carboxylic acid.
[11'] The stampable sheet according to any one of [6'] to [10'], in which the thermoplastic resin (a) includes a polypropylene-based resin.
[12'] A laminate including a layer formed by molding the stampable sheet according to any one of [1'] to [11'], and a metal layer.
[13'] The laminate according to [12'], in which a thermal conductivity measured in a thickness direction of the laminate is 0.32 W/mK or more.
[14'] A laminate including: a layer (A) in which a thermoplastic resin composition (X) and inorganic fibers (Y) are integrated; and a layer (B) having a higher thermal conductivity in the thickness direction than the layer (A), in which the thermoplastic resin composition (X) contains a thermoplastic resin (a) and a thermally expandable flame retardant (b1).
[15'] The laminate according to [14'], in which a thermal conductivity measured in a thickness direction of the laminate is 0.32 W/mK or more.
[16'] The laminate according to [14'] or [15'], in which a thermal conductivity measured in a thickness direction of the layer (B) is 10 W/mK to 400 W/mK.
[17'] The laminate according to any one of [14'] to [16'], in which the layer (B) is a metal layer.
[18'] The laminate according to any one of [14'] to [17'], in which the thermoplastic resin composition (X) contains a polypropylene-based resin.
[19'] The laminate according to any one of [14'] to [18'], in which the thermoplastic resin composition (X) contains a copolymer of an α-olefin and an unsaturated carboxylic acid.
[20'] The laminate according to any one of [14'] to [19'], in which the thermally expandable flame retardant (b1) includes a phosphorus-based flame retardant.
[21'] The laminate according to [20'], in which the phosphorus-based flame retardant contains a compound having a melamine structure or a piperazine structure.
[22'] The laminate according to any one of [14'] to [21'], in which the inorganic fibers (Y) include glass fibers.

### Advantageous Effects of Invention

According to the present invention, it is possible to provide a laminate having high flame shielding property.

### Brief Description of Drawings

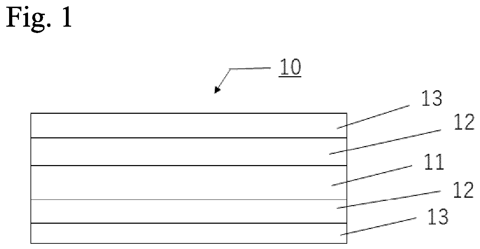

Fig. 1 is a schematic view showing a stampable sheet used in Example 1.

Hereinafter, an embodiment (first aspect) of the present invention will be described in detail, but the following description is an example of an embodiment of the present invention, and the present invention is not limited to these contents in any way.

### [Laminate]

The laminate of the present invention is characterized by including a layer (A) in which a thermoplastic resin composition (X) and inorganic fibers (Y) are integrated, and a layer (B) having a higher thermal conductivity in the thickness direction than the layer (A). Here, the layer (A) is a layer in which the thermoplastic resin composition (X) and the inorganic fibers (Y) are integrated. The term "integrated" means that the thermoplastic resin composition (X) and the inorganic fibers (Y) form one structure, and examples thereof include the following aspects (1) to (4).
(1) A layer obtained by extrusion molding or injection molding of a composition in a state where the inorganic fibers (Y) are dispersed in the thermoplastic resin composition (X) is mentioned.
(2) A state in which a layer made of the thermoplastic resin composition (X) and a layer made of the inorganic fibers (Y) are laminated and adhered to each other is mentioned. An aspect of the adhered state may be, for example, a state in which a layer made of the thermoplastic resin composition (X) and a layer made of the inorganic fibers (Y) are adhered to each other with an adhesive or the like.
(3) A state in which the inorganic fibers (Y), preferably a mat made of the inorganic fibers (Y) (hereinafter, may be referred to as an "inorganic fiber mat"), are impregnated with the thermoplastic resin composition (X), and the thermoplastic resin composition (X) is present in the gaps of the network structure formed by the inorganic fibers is mentioned. Here, the degree of impregnation of the thermoplastic resin composition (X) may be in a state in which the inorganic fiber mat is impregnated with the thermoplastic resin composition (X) entirely or in a state in which the inorganic fiber mat is impregnated with the thermoplastic resin composition (X) partially.
(4) A state in which at least a part of the thermoplastic resin sheet is melt-impregnated in the inorganic fiber mat and the thermoplastic resin sheet and the inorganic fiber mat are welded to each other by laminating the inorganic fibers (Y), preferably an inorganic fiber mat, and a resin sheet made of the thermoplastic resin composition (X) and hot pressing them to produce a laminate is mentioned. Here, the thermoplastic resin sheet may be in a state in which the inorganic fiber mat is entirely melt-impregnated with the thermoplastic resin sheet, or may be in a state in which a part of the thermoplastic resin composition is melt-impregnated in a surface in contact with the thermoplastic resin sheet and the inorganic fiber mat, and the thermoplastic resin sheet remains on the surface.

As described above, the laminate of the present invention includes the layer (A) and the layer (B) having a higher thermal conductivity in the thickness direction than the layer (A). In the laminate of the present invention having such a layer structure, the thermal conductivity measured in the thickness direction of the laminate is preferably 0.32 W/mK or more. In general, it is often considered that the thermal conductivity of a material required to have flame shielding property or heat insulating property is preferably small. However, the present inventors have conceived of a mechanism in which the thermal conductivity in the thickness direction of the laminate is made larger than usual so that the amount of heat given by the flame contact surface is efficiently transported to the opposite side of the flame contact surface and heat is radiated so that the temperature rise on the back surface side of the flame contact surface is suppressed. From this viewpoint, when the thermal conductivity is 0.32 W/mK or more, for example, when the laminate is in contact with a flame, heat can be released to the back surface side, and the rate of temperature rise can be delayed. From the above viewpoint, the thermal conductivity measured in the thickness direction of the laminate of the present invention is more preferably 0.35 W/mK or more and still more preferably 0.36 W/mK or more.

The upper limit value of the thermal conductivity of the laminate of the present invention is not particularly limited as long as the effects of the present invention are exhibited, and for example, the thermal conductivity is preferably 0.70 W/mK or less. When the thermal conductivity is 0.70 W/mK or less, molding becomes easy. From the above viewpoint, the thermal conductivity is more preferably 0.60 W/mK or less, and still more preferably 0.50 W/mK or less.

The laminate of the present invention can efficiently release the heat of the layer (A), and can suppress the temperature rise of the back surface of the layer (A). From the above viewpoints, the difference in thermal conductivity between the layer (A) and the layer (B) is preferably 10 W/mK or more, more preferably 20 W/mK or more, and still more preferably 50 W/mK or more. The difference in thermal conductivity between the layer (A) and the layer (B) does not have an upper limit value, but is usually 300 W/mK or less.

In addition, the thermal conductivity of the layer (A) in the thickness direction is preferably 0.20 W/mK to 0.31 W/mK and more preferably 0.25 W/mK to 0.31 W/mK. The thermal conductivity of the layer (B) in the thickness direction is preferably 10 W/mK to 400 m/mK and more preferably 50 W/mK to 250 W/mK.

Here, the back surface refers to a surface opposite to the flame contact surface.

### <Stampable Sheet>

In the production of the laminate of the present invention, a stampable sheet can be used as a method for forming the layer (A) in which the thermoplastic resin composition (X) and the inorganic fibers (Y) are integrated. The stampable sheet contains a thermoplastic resin composition (X) and inorganic fibers (Y), and the thermoplastic resin composition (X) and the inorganic fibers (Y) are integrated. As described above, the term "integrated" means that the thermoplastic resin composition (X) and the inorganic fibers (Y) form one structure, and the same applies to the stampable sheet. Examples of the integration method include the methods (1) to (4) described above, and a suitable example of the production method of the stampable sheet is the method (4) described above. A method for producing the stampable sheet will be described in detail later.

### [Thermoplastic Resin Composition (X)]

The thermoplastic resin constituting the thermoplastic resin composition (X) according to the present invention (hereinafter referred to as a thermoplastic resin (a)) will be described in detail below.

### <Thermoplastic Resin (a)>

The thermoplastic resin (a) is not particularly limited, and examples thereof include a polyolefin resin, a polycarbonate resin, a polyester resin, an acrylonitrile styrene resin, an ABS resin, a polyamide resin, and a modified polyphenylene oxide. Among these, a polyolefin resin is preferable in the present invention. These may be used alone, or two or more kinds thereof may be used in combination. For example, the thermoplastic resin (a) may be a composite resin of two or more kinds of the above-described thermoplastic resins.

The polyolefin resin is not particularly limited, and examples thereof include the resins described below. The polyester resin is not particularly limited, and examples thereof include polybutylene terephthalate. The polyamide resin is not particularly limited, and examples thereof include nylon 66 and nylon 6.

Among them, the present invention is particularly useful in the case of containing at least a polyolefin resin as the thermoplastic resin (a). In the present invention, the term "polyolefin resin" means a resin in which the proportion of an olefin unit or a cycloolefin unit is 90 mol% or more with respect to 100 mol% of all the constitutional units constituting the resin.

The proportion of the olefin unit or the cycloolefin unit with respect to 100 mol% of all the constitutional units constituting the polyolefin resin is preferably 95 mol% or more and particularly preferably 98 mol% or more.

Examples of the polyolefin resin include α-olefin polymers such as polyethylene, polypropylene, polybutene, poly(3-methyl-1-butene), poly(3-methyl-1-pentene), and poly(4-methyl-1-pentene); α-olefin copolymers such as an ethylene-propylene block or random copolymer, an α-olefin-propylene block or random copolymer having 4 or more carbon atoms, an ethylene-methyl methacrylate copolymer, and an ethylene-vinyl acetate copolymer; and cycloolefin polymers such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemi-isotactic polypropylene, and stereoblock polypropylene. In the α-olefin-propylene block or random copolymer having 4 or more carbon atoms, examples of the α-olefin having 4 or more carbon atoms include butene, 3-methyl-1-butene, 3-methyl-1-pentene, and 4-methyl-1-pentene. These polyolefin resins may be used singly, or two or more kinds thereof may be used in combination.

Among the above-mentioned olefin resins, a polypropylene-based resin (hereinafter sometimes referred to as a "PP resin") is particularly preferred.

### (Melt Flow Rate (MFR))

The melt flow rate (hereinafter, sometimes abbreviated as MFR) (230°C, 2.16 kg load) of the thermoplastic resin (a) used in the present invention is preferably 40 to 500 g/10 min. When the MFR is 40 g/10 min or more, defects do not occur during stamping molding of the stampable sheet, and the processability is not deteriorated. On the other hand, when the MFR is 500 g/10 min or less, burrs are not generated in the production of the stampable sheet. From the above viewpoints, the MFR is preferably 50 to 400 g/10 min, more preferably 60 to 400 g/10 min, and more preferably 70 to 300 g/10 min.

The MFR of the thermoplastic resin (a) can be adjusted, for example, by controlling the hydrogen concentration or the like during polymerization.

The MFR is a value measured in accordance with JIS K 7210.

### (Content of Thermoplastic Resin (a))

The content of the thermoplastic resin (a) in the layer (A) in the laminate of the present invention is not particularly limited, and is preferably 15% to 80% by mass. When the content of the thermoplastic resin is 15% by mass or more, the molding processability becomes particularly good. On the other hand, when the content is 80% by mass or less, the flame retardant, the dispersant, and the inorganic fibers can be contained in sufficient amounts, and good flame shielding property can be obtained. From the above viewpoints, the content of the thermoplastic resin in the layer (A) is preferably 35% to 70% by mass, and more preferably 40% to 60% by mass.

### <Polypropylene-Based Resin (a-1)>

As the thermoplastic resin (a) used in the layer (A) in the laminate of the present invention, it is preferable to contain a polypropylene-based resin. Examples of the polypropylene-based resin include propylene homopolymers and propylene-α-olefin copolymers. Here, the propylene-α-olefin copolymer may be either a random copolymer or a block copolymer.

### (α-Olefin)

Examples of the α-olefin constituting the copolymer include ethylene, 1-butene, 2-methyl-1-propene, 1-pentene, 2-methyl-1-butene, 3-methyl-1-butene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, and 1-octene. These may be copolymerized with propylene using one kind thereof, or may be copolymerized with propylene using two or more kinds thereof. Among these, from the viewpoint of improving impact resistance strength of the layer (A), ethylene or 1-butene having a large effect is preferable, and ethylene is most preferable.

### (Propylene-Ethylene Random Copolymer)

In the case of a random copolymer of propylene and ethylene, the content of the propylene unit is preferably 90% to 99.5% by mass, and more preferably 92% to 99% by mass, and the content of the ethylene unit is preferably 0.5% to 10% by mass, and more preferably 1% to 8% by mass. When the ethylene unit is equal to or more than the above lower limit value, sufficient impact resistance strength of the layer (A) will be obtained, and when it is equal to or less than the above upper limit value, sufficient rigidity will be maintained.

The contents of the propylene unit and the ethylene unit in the random copolymer of propylene and ethylene can be adjusted by controlling the composition ratio of propylene and ethylene at the time of polymerization of the random copolymer of propylene and ethylene.

In addition, the propylene content of the random copolymer of propylene and ethylene is a value measured using a cross-fractionation apparatus, FT-IR, or the like, and for the measurement conditions and the like, for example, a method described in JP 2008-189893 A may be used.

### (Melt Flow Rate (MFR))

The melt flow rate (hereinafter, sometimes abbreviated as MFR) (230°C, 2.16 kg load) of the polypropylene-based resin (a-1) used in the present invention is preferably 40 to 500 g/10 min. When the MFR is 40 g/10 min or more, the stampable sheet for forming the layer (A) is not damaged during stamping molding, and the processability is not deteriorated. On the other hand, when the MFR is 500 g/10 min or less, burrs are not generated in the production of the stampable sheet for forming the layer (A). From the above viewpoints, the MFR is preferably 50 to 400 g/10 min, more preferably 60 to 400 g/10 min, and more preferably 70 to 300 g/10 min.

The MFR of the polypropylene-based resin (A-1) (propylene homopolymer) can be adjusted by controlling the hydrogen concentration or the like during polymerization.

The MFR is a value measured in accordance with JIS K 7210.

### (Content of Polypropylene-Based Resin (a-1))

The content of the polypropylene-based resin (a-1) in the layer (A) of the laminate of the present invention is not particularly limited, and is preferably 15% to 80% by mass. When the content of the polypropylene-based resin is 15% by mass or more, molding processability becomes sufficient, and molding of a stampable sheet for forming the layer (A) becomes easy. On the other hand, when the content is 80% by mass or less, the flame retardant, the dispersant, and the inorganic fibers can be contained in sufficient amounts, and sufficient flame shielding property can be obtained. From the above viewpoints, the content of the polypropylene-based resin in the layer (A) is more preferably 35% to 70% by mass, and still more preferably 40% to 60% by mass.

### <Modified Polyolefin-Based Resin>

The layer (A) of the present invention can further contain a modified polyolefin-based resin in addition to the polypropylene-based resin. Specific examples of the modified polyolefin-based resin include an acid-modified polyolefin-based resin and a hydroxy-modified polyolefin-based resin, and these resins can be used alone or in combination.

The types of the acid-modified polyolefin-based resin and the hydroxy-modified polyolefin-based resin used as the modified polyolefin-based resin are not particularly limited, and may be conventionally known ones.

### (Acid-Modified Polyolefin-Based Resin)

Examples of the acid-modified polyolefin-based resin include those obtained by graft-copolymerizing a polyolefin such as polyethylene, polypropylene, an ethylene-α-olefin copolymer, an ethylene-α-olefin-non-conjugated diene compound copolymer (EPDM or the like), or an ethylene-aromatic monovinyl compound-conjugated diene compound copolymerized elastomer with an unsaturated carboxylic acid such as maleic acid or maleic anhydride to chemically modify the polyolefin.

This graft copolymerization is carried out, for example, by reacting the above polyolefin with an unsaturated carboxylic acid in an appropriate solvent using a radical generator such as benzoyl peroxide. The component of an unsaturated carboxylic acid or a derivative thereof can also be introduced into the polymer chain by random or block copolymerization with a monomer for polyolefin.

Examples of the unsaturated carboxylic acid used for the modification include compounds having a polymerizable double bond into which a carboxy group such as maleic acid, fumaric acid, itaconic acid, acrylic acid, and methacrylic acid and, if necessary, a functional group such as a hydroxy group and an amino group are introduced.

Examples of the derivative of the unsaturated carboxylic acid include acid anhydrides, esters, amides, imides, and metal salts thereof, and specific examples thereof include maleic anhydride, itaconic anhydride, methyl acrylate, ethyl acrylate, butyl acrylate, and methyl methacrylate. Among these, maleic anhydride is preferable.

Preferred examples of the acid-modified polyolefin-based resin include a resin modified by graft-polymerizing maleic anhydride to an olefin-based polymer having ethylene and/or propylene as a main polymer constituent unit, and a resin modified by copolymerizing an olefin having ethylene and/or propylene as a main component with maleic anhydride. Specific examples thereof include a combination of polyethylene/maleic anhydride-grafted ethylene-butene-1 copolymer and a combination of polypropylene/maleic anhydride-grafted polypropylene.

### (Hydroxy-Modified Polyolefin-Based Resin)

The hydroxy-modified polyolefin-based resin is a modified polyolefin-based resin containing a hydroxy group. The hydroxy-modified polyolefin-based resin may have a hydroxy group at an appropriate site, for example, at the end of the main chain or in a side chain.

Examples of the olefin-based resin constituting the hydroxy-modified polyolefin-based resin include a homopolymer or a copolymer of an α-olefin such as ethylene, propylene, butene, 4-methylpentene-1, hexene, octene, nonene, decene, and dodecene, and a copolymer of the α-olefin and a copolymerizable monomer.

Preferable examples of the hydroxy-modified polyolefin-based resin include hydroxy-modified polyethylene-based resins such as low density, medium density, or high-density polyethylene, linear low-density polyethylene, ultra-high molecular weight polyethylene, ethylene-(meth)acrylic acid ester copolymer, and ethylene-vinyl acetate copolymer; and hydroxy-modified polypropylene-based resins such as polypropylene homopolymer such as isotactic polypropylene, random copolymer of propylene and an α-olefin (for example, ethylene, butene, hexane), a propylene-α-olefin block copolymer, and hydroxy-modified poly(4-methylpentene-1).

### <Thermally Expandable Flame Retardant (b1)>

In the layer (A) of the laminate of the present invention, the thermoplastic resin composition (X) is characterized by containing a thermally expandable flame retardant (b1).

The thermally expandable flame retardant is a flame retardant that suppresses combustion of a material by forming a surface expansion layer (intumescent) that prevents radiant heat from a combustion source and diffusion of combustion gas, smoke, and the like from a combustion object to the outside.

Among the thermally expandable flame retardants, a phosphorus-based flame retardant is preferable, and examples thereof include salts of (poly)phosphoric acid and a nitrogen compound. Specific examples of the thermally expandable flame retardant include ammonium salts and amine salts of (poly)phosphoric acid such as ammonium polyphosphate, melamine polyphosphate, piperazine polyphosphate, ammonium pyrophosphate, melamine pyrophosphate, and piperazine pyrophosphate.

Among these, it is particularly preferable to contain a compound having a melamine structure or a piperazine structure.

Examples of the nitrogen compound include ammonia, melamine, piperazine, and other nitrogen compounds, and examples of the other nitrogen compound include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzoguanamine, acetoguanamine, phthalodiguanamine, melamine cyanurate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

Examples of the thermally expandable flame retardant other than the above include expandable graphite.

The content of the expandable graphite in the thermoplastic resin composition (X) is preferably 1% to 20% by mass. When the content of graphite is 1% by mass or more, the thermal conductivity of the layer (A) can be improved, and when the content of graphite is 20% by mass or less, falling off of graphite from the stampable sheet for forming the layer (A) can be suppressed. From the above viewpoints, the content of graphite is more preferably 3% to 10% by mass.

### (Content of Thermally Expandable Flame Retardant (b1))

The content of the thermally expandable flame retardant (b1) in the layer (A) of the present invention is not particularly limited, and is preferably in a range of 1% to 30% by mass as the content in the thermoplastic resin composition (X). When the content is 1% by mass or more, good flame retardancy can be imparted to the layer (A), and good flame shielding property can be obtained. On the other hand, when the content of the flame retardant is 30% by mass or less, the thermoplastic resin can be contained at a sufficient content ratio, so that the molding processability becomes better. From the above viewpoints, the content of the flame retardant in the thermoplastic resin composition (X) is more preferably in a range of 1% to 25% by mass, and still more preferably in a range of 3% to 20% by mass.

### <Flame Retardant or Flame Retardant Aid (b2)>

In the layer (A) of the laminate of the present invention, the thermoplastic resin composition (X) contains, in addition to the thermally expandable flame retardant (b1), a flame retardant or a flame retardant aid (b2) different from the thermally expandable flame retardant (b1), and the decomposition temperature of the flame retardant or the flame retardant aid (b2) is preferably higher than the thermal expansion starting temperature of the thermally expandable flame retardant (b1) by 10°C or more.

When the decomposition temperature of the flame retardant or the flame retardant aid (b2) is higher than the thermal expansion starting temperature of the thermally expandable flame retardant (b1) by 10°C or more, even when the thermal expansion of the thermally expandable flame retardant (b1) is started and the temperature further increases after the flame shielding and heat insulating effect is exhibited, the flame retardant or the flame retardant aid (b2) exhibits an effect, and thus further combustion is suppressed.

From the above viewpoints, the decomposition temperature of the flame retardant or the flame retardant aid (b2) is more preferably higher than the thermal expansion starting temperature of the flame retardant (b1) by 20°C or more, and still more preferably higher by 30°C or more.

The flame retardant or the flame retardant aid (b2) is not particularly limited as long as it is different from the thermally expandable flame retardant (b1) and has a decomposition temperature higher than the thermal expansion starting temperature of the thermally expandable flame retardant (b1) by 10°C or more, and is preferably a non-thermally expandable flame retardant or a non-thermally expandable flame retardant aid (b2') described later.

### <Non-Thermally Expandable Flame Retardant or Non-Thermally Expandable Flame Retardant Aid (b2')>

The thermoplastic resin composition (X) according to the present invention preferably contains a non-thermally expandable flame retardant or a non-thermally expandable flame retardant aid (b2') in addition to the thermally expandable flame retardant (b1).

Suitable examples of the non-thermally expandable flame retardant or the non-thermally expandable flame retardant aid (b2') include metal hydroxide and polytetrafluoroethylene. These can be used alone or in combination of two or more kinds thereof.

### (Metal Hydroxide)

The metal hydroxide is not particularly limited as long as it can absorb thermal energy by decomposition of a hydroxy group, and specifically, an inorganic metal hydroxide such as magnesium hydroxide, aluminum hydroxide, or calcium hydroxide is preferable. As the metal hydroxide, one kind or two or more kinds can be used.

Among the inorganic metal hydroxides, hydroxides of trivalent metals and alkaline earth metal hydroxides, in particular, magnesium hydroxide (decomposition temperature: 350°C), aluminum hydroxide (decomposition temperature: 200°C), and calcium hydroxide (decomposition temperature: 580°C) are preferable. Among them, magnesium hydroxide is excellent in obtaining the effect of the present invention and is preferable.

The average particle diameter of the metal hydroxide is not particularly limited, and is usually 0.1 to 15 µm, preferably 0.2 to 10 µm, more preferably 0.3 to 5 µm, and particularly preferably 0.5 µ m to 2 µm. In a case where the particle diameter of the metal hydroxide is within the above-described range, dispersibility of the metal hydroxide in the thermoplastic resin composition (X) becomes high, and flame retardancy is more easily exhibited.

The content of the metal hydroxide in the thermoplastic resin composition (X) is preferably in a range of 10% to 60% by mass, and more preferably in a range of 15% to 40% by mass. When it is equal to or greater than the above lower limit value, the flame retardant effect of the metal hydroxide can be sufficiently exhibited, and on the other hand, when it is equal to or less than the above upper limit value, aggregation of the metal or the like will not occur, such being preferred.

### (Polytetrafluoroethylene)

Polytetrafluoroethylene is a fluorine-based drip preventing agent having an effect of improving drip resistance and increasing flame retardancy, that is, a function as a drip preventing agent, when the layer (A) in the laminate of the present invention is burned.

Polytetrafluoroethylene is obtained by subjecting a tetrafluoroethylene monomer to emulsion polymerization using a fluorine-containing surfactant. During the emulsion polymerization, fluorine-containing olefins such as hexafluoropropylene, chlorotrifluoroethylene, fluoroalkylethylene, and perfluoroalkyl vinyl ether, and fluorine-containing alkyl esters of (meth)acrylic acid such as perfluoroalkyl esters of (meth)acrylic acid can be used as copolymerization components as long as the characteristics of polytetrafluoroethylene are not impaired. The other monomer that is copolymerized with tetrafluoroethylene can be used within a range that does not impair the characteristics of polytetrafluoroethylene, and is preferably 10% by mass or less in 100% by mass of polytetrafluoroethylene.

The mass-average molecular weight (Mw) of the polytetrafluoroethylene is preferably 1,000,000 to 50,000,000, and more preferably 3,000,000 to 30,000,000. When the Mw is 1,000,000 or more, the drip resistance at the time of combustion of the laminate of the present invention is improved, and the flame retardancy becomes good. On the other hand, when the Mw is 50,000,000 or less, the dispersibility of the polytetrafluoroethylene is excellent, and the processability of the laminate is maintained.

The decomposition temperature of the polytetrafluoroethylene depends on the mass-average molecular weight, and is about 500°C to 600°C in a case where Mw is in the above range.

The content of the polytetrafluoroethylene in the thermoplastic resin composition (X) is preferably 0.01% to 10% by mass, more preferably 0.05% to 5% by mass, and still more preferably 0.1% to 3% by mass. By setting the content of polytetrafluoroethylene to 0.01% by mass or more, drip resistance during combustion is imparted. On the other hand, by setting the content of polytetrafluoroethylene to 10% by mass or less, processability of the laminate is maintained.

### <Other Flame Retardant>

The thermoplastic resin composition (X) according to the present invention preferably contains the thermally expandable flame retardant (b1), the flame retardant (b2) having a decomposition temperature higher than the thermal expansion starting temperature of the thermally expandable flame retardant (b1) by 10°C or more, preferably 20°C or more, and the non-thermally expandable flame retardant (b2') as described above, but may contain a flame retardant other than these flame retardants.

The other flame retardant is not particularly limited, and a conventionally used flame retardant can be used.

Specific examples thereof include a phosphorus-based flame retardant other than the thermally expandable flame retardant (b1), a bromine-based flame retardant, and an antimony-based flame retardant. Among them, a phosphorus-based flame retardant is preferable from the viewpoint of improving flame shielding property.

### (Phosphorus-Based Flame Retardant)

The phosphorus-based flame retardant is a phosphorus compound, that is, a compound containing a phosphorus atom in the molecule. The phosphorus-based flame retardant exhibits a flame retardant effect by forming char during combustion of the resin composition.

The phosphorus-based flame retardant may be a known one, and examples thereof include (poly)phosphates and (poly)phosphoric acid esters. Here, "(poly)phosphate" indicates a phosphate or a polyphosphate, and "(poly)phosphoric acid ester" indicates a phosphoric acid ester or a polyphosphoric acid ester.

The phosphorus-based flame retardant is preferably solid at 80°C.

As the phosphorus-based flame retardant, a (poly)phosphate is preferable in terms of flame retardancy.

Examples of the (poly)phosphate include ammonium polyphosphate salt, melamine polyphosphate salt, piperazine polyphosphate salt, piperazine orthophosphate salt, melamine pyrophosphate salt, piperazine pyrophosphate salt, melamine polyphosphate salt, melamine orthophosphate salt, calcium phosphate, and magnesium phosphate.

In the above examples, compounds obtained by replacing melamine or piperazine with other nitrogen compounds can also be used in the same manner. These (poly)phosphates may be used singly, or two or more kinds thereof may be used in combination.

Examples of a commercially available product of the phosphorus-based flame retardant include ADK STAB FP-2100J, FP-2200, and FP-2500S (manufactured by ADEKA Corporation).

### (Bromine-Based Flame Retardant)

Examples of the bromine-based flame retardant include decabromodiphenyl ether, tetrabromobisphenol A, tetrabromobisphenol S, 1,2-bis(2',3',4',5',6'-pentabromophenyl)ethane, 1,2-bis(2,4,6-tribromophenoxy)ethane, 2,4,6-tris(2,4,6-tribromophenoxy)-1,3,5-triazine, 2,6-dibromophenol, 2,4-dibromophenol, brominated polystyrene, ethylenebistetrabromophthalimide, hexabromocyclododecane, hexabromobenzene, pentabromobenzyl acrylate, 2,2-bis[4'(2",3"-dibromopropoxy)-3',5'-dibromophenyl]-propane, bis[3,5-dibromo-4-(2,3-dibromopropoxy)phenyl]sulfone, and tris(2,3-dibromopropyl) isocyanurate.

### (Antimony-Based Flame Retardant)

Examples of the antimony-based flame retardant include antimony trioxide, antimony tetroxide, antimony pentoxide, sodium pyroantimonate, antimony trichloride, antimony trisulfide, antimony oxychloride, antimony dichloride perchloropentane, and potassium antimonate, and antimony trioxide and antimony pentoxide are particularly preferable.

Among the above-mentioned flame retardants, a phosphorus-based flame retardant is preferable from the viewpoint of having excellent flame retardancy without biopersistence, and a non-halogen-based flame retardant is preferable from the viewpoint of environmental friendliness. In addition, an intumescent flame retardant is preferable from the viewpoint of improving the flame shielding property of the obtained stampable sheet.

The above-mentioned flame retardants may be used singly, or two or more kinds thereof may be used in combination.

### (Metal Oxide)

The thermoplastic resin composition (X) according to the present invention preferably contains a metal oxide. The metal oxide has a role as a flame retardant aid. Specific examples thereof include cadmium oxide, zinc oxide, cuprous oxide, cupric oxide, ferrous oxide, ferric oxide, cobalt oxide, manganese oxide, molybdenum oxide, tin oxide, and titanium oxide, and among these, zinc oxide having a high effect is particularly preferable.

The content of the metal oxide is preferably in a range of 0.01 to 20 parts by mass, more preferably in a range of 0.5 to 10 parts by mass, and still more preferably in a range of 1 to 5 parts by mass with respect to 100 parts by mass of the flame retardant containing the thermally expandable flame retardant (b1). When the content is in the above range, the effect as a flame retardant aid can be sufficiently exhibited.

### <Copolymer of α-Olefin and Unsaturated Carboxylic Acid>

The thermoplastic resin composition (X) according to the present invention preferably further contains a copolymer of an α-olefin and an unsaturated carboxylic acid.

By using the copolymer, the dispersibility of the flame retardant containing the thermally expandable flame retardant (b1) can be improved, and the content of the thermally expandable flame retardant and the like can be reduced.

Regarding the α-olefin unit and the unsaturated carboxylic acid unit in the "copolymer of an α-olefin and an unsaturated carboxylic acid" (hereinafter referred to as "copolymer (c1)") according to the present invention, the proportion of the α-olefin unit with respect to the total 100 mol% thereof is preferably 20 mol% or more and 80 mol% or less.

In the copolymer (c1), the proportion of the α-olefin unit with respect to the total amount of the α-olefin unit and the unsaturated carboxylic acid unit is more preferably 30 mol% or more and more preferably 70 mol% or less. When the proportion of the α-olefin is equal to or more than the above lower limit value, the compatibility with the thermoplastic resin (a) such as a polyolefin-based resin will be more excellent, and when it is equal to or less than the above upper limit value, the compatibility with the thermally expandable flame retardant (b1) will be more excellent.

In the copolymer (c1), as the α-olefin, an α-olefin having 5 or more carbon atoms is preferable, and an α-olefin having 10 or more and 80 or less carbon atoms is more preferable. When the α-olefin has 5 or more carbon atoms, the compatibility with the thermoplastic resin (a) tends to be better, and when the α-olefin has 80 or less carbon atoms, it is advantageous in terms of raw material cost. From the above viewpoints, the number of carbon atoms of the α-olefin is still more preferably 12 or more and 70 or less, and particularly preferably 18 or more and 60 or less.

In the copolymer (c1), examples of the unsaturated carboxylic acid include (meth)acrylic acid, maleic acid, methylmaleic acid, fumaric acid, methylfumaric acid, tetrahydrophthalic acid, itaconic acid, citraconic acid, crotonic acid, isocrotonic acid, glutaconic acid, norbornane-5-ene-2,3-dicarboxylic acid, and esters, anhydrides, and imides of these unsaturated carboxylic acids. The term "(meth)acrylic acid" refers to acrylic acid or methacrylic acid.

Specific examples of the ester, anhydride, or imide of the unsaturated carboxylic acid include (meth)acrylic acid esters such as methyl (meth)acrylate, ethyl (meth)acrylate, butyl (meth)acrylate, 2-ethylhexyl (meth)acrylate, and glycidyl (meth)acrylate; dicarboxylic acid anhydrides such as maleic anhydride, itaconic anhydride, citraconic anhydride, and 5-norbomene-2,3-dicarboxylic acid anhydride; and maleimide compounds such as maleimide, N-ethylmaleimide, and N-phenylmaleimide. One kind of these may be used singly, or two or more kinds thereof may be used in combination.

Among the above, esters and dicarboxylic acid anhydrides are preferable from the viewpoint of copolymerization reactivity. Among them, dicarboxylic acid anhydrides are preferable, and maleic anhydride is particularly preferable, from the viewpoint of compatibility with a phosphorus-based flame retardant suitable as a flame retardant.

The weight-average molecular weight of the copolymer (c1) is preferably 2,000 or more, and more preferably 3,000 or more, and is preferably 50,000 or less, and more preferably 30,000 or less. When the weight-average molecular weight of the copolymer (c1) is within the above range, the dispersibility of the thermally expandable flame retardant (b1) is more excellent.

The weight-average molecular weight of the copolymers (c1) is a value in terms of standard polystyrene measured by dissolving the copolymer (c1) in tetrahydrofuran (THF) and performing gel permeation chromatography.

Examples of a commercially available product of the copolymer (c1) include Licolub CE2 (manufactured by Clariant (Japan) K.K.) and DIACARNA 30M (manufactured by Mitsubishi Chemical Corporation).

The content of the copolymer (c1) with respect to 100 parts by mass of the flame retardant containing the thermally expandable flame retardant (b1) in the laminate of the present invention is in a range of more than 0 and 25 parts by mass or less, and preferably in a range of 0.01 to 10 parts by mass.

According to the investigation of the present inventors, when a flame retardant is uniformly dispersed and present in the inorganic fibers (Y) constituting the layer (A) using a thermoplastic resin as a matrix resin, the flame shielding property of the layer (A) can be significantly improved. Although the detailed mechanism is unknown, the present inventors speculate as follows. That is, when the flame retardant is uniformly dispersed in the resin between the inorganic fibers, the char formed by the phosphorus-based flame retardant being in contact with the flame is fixed in the gaps between the inorganic fibers. Furthermore, the gaps between the inorganic fibers limit the size of the char formed by the expansion during the contact with the flame, so that the size of the char formed is uniform. It is considered that the combination of the char fixing effect of the inorganic fibers and the uniformity of the size of the char forms a dense char and significantly improves the flame shielding property of the layer (A). Based on these findings, the present inventors have found that by setting the ratio of the content of the dispersant to the content of the flame retardant to a specific range, the flame retardant can be controlled to be uniformly present in the resin between the inorganic fibers, and the flame shielding property of the layer (A) can be significantly improved.

For the above reasons, when the content of the copolymer (c1) is more than 0, the dispersibility of the thermally expandable flame retardant (b1) becomes sufficient, and sufficient flame shielding property can be imparted to the layer (A). On the other hand, when the content is 25 parts by mass or less, the physical properties of the layer (A) become sufficient. From the same viewpoint, the content of the copolymer (c1) is preferably 0.01 parts by mass or more, more preferably 0.1 parts by mass or more, still more preferably 1 part by mass or more, and particularly preferably 2 parts by mass or more. On the other hand, the upper limit value is more preferably 20 parts by mass or less, still more preferably 15 parts by mass or less, yet still more preferably 10 parts by mass or less, even more preferably 5 parts by mass or less, and particularly preferably 3 parts by mass or less.

The proportion of the copolymer (c1) with respect to 100 parts by mass of the total of the thermoplastic resin (a) and the flame retardant containing the thermally expandable flame retardant (b1) is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, still more preferably 2.0 parts by mass or less, yet still more preferably 1.5 parts by mass or less, and even more preferably 1.0 parts by mass or less. When the proportion of the copolymer (c1) is equal to or more than the lower limit value, the thermally expandable flame retardant (b1) is more favorably dispersed, and the flame shielding property and physical properties of the obtained laminate and the appearance of the obtained molded body are more favorable. When the proportion of the copolymer (c1) is equal to or less than the upper limit value, the influence of the copolymer (c1) on the flame shielding property of the layer (A) can be further suppressed. In particular, the proportion of the copolymer (c1) with respect to 100 parts by mass of the total of the polyolefin-based resin and the flame retardant containing the thermally expandable flame retardant (b1) is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, still more preferably 2.0 parts by mass or less, yet still more preferably 1.5 parts by mass or less, and even more preferably 1.0 parts by mass or less.

In addition, with respect to the inorganic fibers (Y) described in detail below, the proportion of the copolymer (c1) with respect to 100 parts by mass of the inorganic fibers (Y) is preferably 0.01 parts by mass or more, more preferably 0.05 parts by mass or more, and still more preferably 0.1 parts by mass or more. On the other hand, the proportion is preferably 10 parts by mass or less, more preferably 5.0 parts by mass or less, and still more preferably 2.0 parts by mass or less. When the proportion of the copolymer (c1) is equal to or more than the lower limit value, the flame shielding property and physical properties of the obtained laminate and the appearance of the obtained molded body are more favorable. When the proportion of the copolymer (c1) is equal to or less than the upper limit value, the influence of the copolymer (c1) on the flame shielding property of the laminate can be further suppressed.

### <(Y) Inorganic Fiber>

The layer (A) of the present invention contains (Y) inorganic fibers. As the inorganic fibers (Y), various fibers can be used, and examples thereof include metal oxide fibers such as a glass fiber, rock wool, an alumina fiber, and a silica alumina fiber, ceramic fibers such as a potassium titanate fiber, a calcium silicate (wollastonite) fiber, and a ceramic fiber, carbon fibers, and metal fibers. These inorganic fibers may be used alone or in combination of two or more kinds thereof.

Among the inorganic fibers, at least one kind selected from a glass fiber and an alumina fiber is preferable from the viewpoint of flame shielding property and processability, and a glass fiber is particularly preferable.

The inorganic fibers (Y) can include two or more kinds of inorganic fibers having different melting temperatures. As the combination of two or more kinds of inorganic fibers having different melting temperatures, it is preferable that at least one kind is a glass fiber and the other one or more kinds are a combination of one or more kinds of inorganic fibers selected from the group consisting of an alumina fiber, a silica fiber, an alkaline earth silicate fiber (biosoluble), and a carbon fiber. By including two or more kinds of inorganic fibers having different melting temperatures, it is possible to effectively prevent deterioration of the function of the flame shielding property.

In addition, the inorganic fiber used in the present invention may be used in combination with a sizing agent or a surface treatment agent. Examples of the sizing agent or the surface treatment agent include compounds having a functional group such as an epoxy-based compound, a silane-based compound, and a titanate-based compound.

The average fiber diameter of the inorganic fibers is preferably 3 to 25 µm. In addition, the average fiber length is preferably 0.1 mm or more, more preferably 1 mm or more, and still more preferably 5 mm or more.

Since the preferred ranges of the average fiber diameter and the average fiber length vary depending on the type of the inorganic material constituting the inorganic fibers, specific preferred ranges thereof will be described later.

The fiber diameter can be measured using a scanning electron microscope or the like, and the average fiber diameter can be obtained by, for example, measuring the fiber diameters of 10 fibers at random and calculating the average value. The fiber length can be measured using a ruler, calipers, or the like from an image enlarged by a microscope or the like as necessary, and the average fiber length can be obtained by, for example, measuring the fiber lengths of 10 fibers at random and calculating the average value.

Since the preferred ranges of the average fiber diameter and the average fiber length vary depending on the type of the inorganic material constituting the inorganic fibers, specific preferred ranges thereof will be described later.

The content of the inorganic fibers in the layer (A) of the present invention is 1% to 80% by mass. When the content of the inorganic fibers is less than 1% by mass, the strength, rigidity, and impact resistance of the stampable sheet may be reduced, and when the content of the inorganic fibers is more than 80% by mass, the production and processing of the stampable sheet may become extremely difficult. In addition, when the content of the inorganic fibers is more than 80% by mass, the specific gravity of the laminate becomes heavy, and thus the effect of reducing the weight as a substitute for the metal is reduced, which is not preferable.

From the above viewpoints, the content of the inorganic fibers (D) in the layer (A) is more preferably 3% to 60% by mass, still more preferably 10% to 50% by mass, and particularly preferably 30% to 45% by mass.

### (Glass Fiber)

One of the inorganic fibers (Y) suitable for the stampable sheet of the present invention includes glass fibers. The glass fibers may be, for example, long fibers having an average fiber length of 30 mm or more, or may be fibers (chopped strands) having a short average fiber length, but from the viewpoints of flame shielding property, rigidity, impact resistance, and the like, it is preferable to use glass fibers having a long average fiber length.

More specifically, the average fiber length is preferably 5 mm or more. In a case where the average fiber length is 5 mm or more, the strength and the impact resistance of the stampable sheet become satisfactory. From the above viewpoints, the average fiber length of the glass fibers is preferably 5 mm or more, and more preferably 30 mm or more.

In addition, the upper limit of the average fiber length of the glass fibers is not particularly limited, and for example, in a case where a pellet produced by a pultrusion method using the glass fibers is used, the length of the pellet is the fiber length of the glass fibers, and thus the upper limit of the average fiber length of the glass fibers is about 20 mm at the maximum. In the swirl mat system using long glass fibers, the length of the glass fibers in the roving used for production is the maximum fiber length, which is about 17,000 m (17 km), but when cut according to the size of the stampable sheet, the cut length is the maximum fiber length.

In addition, the average fiber diameter of the glass fibers is preferably in a range of 9 to 25 µm. When the average fiber diameter is 9 µm or more, the rigidity and the impact resistance of the laminate become sufficient, and on the other hand, when the average fiber diameter is 25 µm or less, the strength of the stampable sheet becomes satisfactory. From the above viewpoints, the average fiber diameter of the glass fibers is more preferably in a range of 10 to 15 µm.

The average fiber diameter and the average fiber length of the glass fibers can be measured by the above-described method.

The material of the glass fibers used in the present invention is not particularly limited, and may be any of alkali-free glass, low-alkali glass, and alkali-containing glass, and those having various compositions conventionally used as glass fibers can be used.

### (Alumina Fiber)

One of the inorganic fibers (D) suitable for the laminate of the present invention includes alumina fibers. The alumina fibers are usually fibers composed of alumina and silica, and in the stampable sheet of the present invention, the alumina/silica composition ratio (mass ratio) of the alumina fibers is preferably in a range called a mullite composition or high alumina composition of 65/35 to 98/2, more preferably 70/30 to 95/5, and particularly preferably 70/30 to 74/26.

The average fiber diameter of the alumina fibers is preferably in a range of 3 to 25 µm, and it is preferable that the alumina fibers do not substantially contain fibers having a fiber diameter of 3 µm or less. Here, the expression "does not substantially contain fibers having a fiber diameter of 3 µm or less" means that the content of fibers having a fiber diameter of 3 µm or less is 0.1% by mass or less of the total mass of the inorganic fibers.

In addition, the average fiber diameter of the alumina fibers is more preferably 5 to 8 µm. When the average fiber diameter of the inorganic fibers is too large, the resilience and toughness of the mat-like inorganic fiber aggregate layer decrease, and conversely, when the average fiber diameter is too small, the amount of dust floating in the air increases, and the probability that inorganic fibers having a fiber diameter of 3 µm or less are contained increases.

The alumina fibers are fibers having an average fiber length of preferably 5 mm or more, more preferably 30 mm or more, and still more preferably 50 mm or more, and also preferably 3.0 × 10³ mm or less, and more preferably 1.0 × 10³ mm or less. When the average fiber length and the average fiber diameter of the alumina fibers are within these ranges, the strength and the impact resistance of the laminate become satisfactory.

### (Carbon Fiber)

The preferred range of the carbon fibers is also equivalent to that of the glass fibers.

### <Optional Additional Components>

In the layer (A) in the laminate of the present invention, in addition to the above-described components, optional additional components can be blended for the purpose of imparting other effects, such as further improving the effects of the present invention, to the extent that the effects of the present invention are not significantly impaired.

Specific examples thereof include colorants such as pigments, light stabilizers such as hindered amine-based light stabilizers, ultraviolet absorbers such as benzotriazole-based ultraviolet absorbers, nucleating agents such as sorbitol-based nucleating agents, antioxidants such as phenol-based and phosphorus-based antioxidants, antistatic agents such as nonionic surfactants, neutralizing agents such as inorganic compounds, antibacterial and antifungal agents such as thiazole-based antibacterial and antifungal agents, flame retardants and flame retardant aids such as halogen compounds and lignophenols, plasticizers, dispersants such as organic metal salt-based dispersants, lubricants such as fatty acid amide-based lubricants, metal deactivators such as nitrogen compounds, polyolefin resins other than the polypropylene-based resins, thermoplastic resins such as polyamide resins and polyester resins, and elastomers (rubber components) such as olefin-based elastomers and styrene-based elastomers.

Two or more kinds of these optional additional components may be used in combination.

As the colorant, for example, inorganic or organic pigments are effective for imparting or improving the colored appearance, appearance, texture, commercial value, weather resistance, durability, and the like of the polypropylene-based resin composition and the molded body thereof.

Specific examples of the inorganic pigments include carbon blacks such as furnace carbon and ketjen carbon, titanium oxide, iron oxides (red iron oxide and the like), chromic acid (yellow lead and the like), molybdic acid, selenium sulfide, and ferrocyanides, and specific examples of the organic pigments include azo-based pigments including hardly soluble azo lakes, soluble azo lakes, insoluble azo chelates, condensable azo chelates, and other azo chelates, phthalocyanine-based pigments such as phthalocyanine blue and phthalocyanine green, threne-based pigments such as anthraquinone, perinone, perylene, and thioindigo, dye lakes, quinacridone-based pigments, dioxazine-based pigments and isoindolinone-based pigments. In order to obtain a metallic tone or a pearl tone, aluminum flakes and a pearl pigment can be contained. In addition, a dye can also be contained.

As light stabilizers and ultraviolet absorbers, for example, hindered amine compounds, benzotriazole-based compounds, benzophenone-based compounds, salicylate-based compounds, and the like are effective for imparting and improving weather resistance, durability, and the like of polypropylene-based resin compositions and the molded body thereof, and are effective for further improving weather-resistance discoloration property.

Specific examples of the hindered amine compounds include a condensate of dimethyl succinate and 1-(2-hydroxyethyl)-4-hydroxy-2,2,6,6-tetramethylpiperidine; poly[6-(1,1,3,3-tetramethylbutyl)imino-1,3,5-triazine-2,4-diyl][(2,2,6,6-tetramethyl-4-piperidyl)imino]-hexamethylene-[(2,2,6,6-tetramethyl-4-piperidyl)imino]]; tetrakis(2,2,6,6-tetramethyl-4-piperidyl)1,2,3,4-butane tetracarboxylate; tetrakis(1,2,2,6,6-pentamethyl-4-piperidyl)1,2,3,4-butanetetracarboxylate; bis(1,2,2,6,6-pentamethyl-4-piperidyl)sebacate; and bis-2,2,6,6-tetramethyl-4-piperidyl sebacate. Specific examples of the benzotriazole-based compounds include 2-(2'-hydroxy-3',5'-di-t-butylphenyl)-5-chlorobenzotriazole; and 2-(2'-hydroxy-3'-t-butyl-5'-methylphenyl)-5-chlorobenzotriazole. Specific examples of the benzophenone-based compounds include 2-hydroxy-4-methoxybenzophenone; and 2-hydroxy-4-n-octoxybenzophenone. Specific examples of the salicylate-based compounds include 4-t-butylphenyl salicylate; and 2,4-di-t-butylphenyl 3',5'-di-t-butyl-4'-hydroxybenzoate.

Here, the method of using the light stabilizer and the ultraviolet absorber in combination is preferable because the effect of improving weather resistance, durability, weather-resistance discoloration property, and the like is large.

As the antioxidant, for example, a phenol-based, phosphorus-based, or sulfur-based antioxidant is effective for imparting and improving heat resistance stability, processing stability, heat aging resistance, and the like of the polypropylene-based resin composition and the molded body thereof.

In addition, as the antistatic agent, for example, a nonionic or cationic antistatic agent is effective for imparting and improving antistatic property of the polypropylene-based resin composition and the molded body thereof.

Examples of the olefin-based elastomer include ethylene-α-olefin copolymer elastomers such as an ethylene-propylene copolymer elastomer (EPR), an ethylene-butene copolymer elastomer (EBR), an ethylene-hexene copolymer elastomer (EHR), and an ethylene-octene copolymer elastomer (EOR); ethylene-α-olefin-diene terpolymer elastomers such as an ethylene-propylene-ethylidenenorbornene copolymer, an ethylene-propylene-butadiene copolymer, and an ethylene-propylene-isoprene copolymer; and a styrene-butadiene-styrene triblock copolymer elastomer (SBS).

Examples of the styrene-based elastomer include styrene-based elastomers such as a styrene-isoprene-styrene triblock copolymer elastomer (SIS), a styrene-ethylene-butylene copolymer elastomer (SEB), a styrene-ethylene-propylene copolymer elastomer (SEP), a styrene-ethylene-butylene-styrene copolymer elastomer (SEBS), a styrene-ethylene-butylene-ethylene copolymer elastomer (SEBC), a hydrogenated styrene-butadiene elastomer (HSBR), a styrene-ethylene-propylene-styrene copolymer elastomer (SEPS), a styrene-ethylene-ethylene-propylene-styrene copolymer elastomer (SEEPS), a styrene-butadiene-butylene-styrene copolymer elastomer (SBBS), a partially hydrogenated styrene-isoprene-styrene copolymer elastomer, and a partially hydrogenated styrene-isoprene-butadiene-styrene copolymer elastomer, and hydrogenated polymer-based elastomers such as an ethylene-ethylene-butylene-ethylene copolymer elastomer (CEBC).

Among them, it is preferable to use an ethylene-octene copolymer elastomer (EOR) and/or an ethylene-butene copolymer elastomer (EBR) from the viewpoint that appropriate flexibility or the like is easily imparted and impact resistance tends to be excellent in the polypropylene-based resin composition of the present invention and the molded body thereof.

### <Method for Producing Thermoplastic Resin Composition (X)>

The thermoplastic resin composition (X) according to the present invention contains the thermoplastic resin (a), a modified polyolefin-based resin added as necessary, the flame retardant containing the thermally expandable flame retardant (b1), and the copolymer (c1) added as necessary, as described above. In addition, an optional additional component may be further blended. In the thermoplastic resin composition (X), when the thermoplastic resin (a) is the polypropylene-based resin (a-1), the thermoplastic resin composition (X) may be particularly referred to as a polypropylene-based resin composition (hereinafter, may be described as a "PP composition").

As a method for producing the thermoplastic resin composition (X) or the PP composition, a conventionally known method can be used, and the thermoplastic resin composition (X) or the PP composition can be produced by blending, mixing, and melt-kneading the above components.

The mixing is performed by using a mixer such as a tumbler, a V-blender, a ribbon blender, and the melt-kneading is performed by using an apparatus such as a single-screw extruder, a twin-screw extruder, a Banbury mixer, a roll mixer, a Brabender plastograph, a kneader, and the mixture is melt-kneaded and granulated.

### <Method for Producing Stampable Sheet>

In the production of the laminate of the present invention, a stampable sheet can be used for forming the layer (A) in which the thermoplastic resin composition (X) and the inorganic fibers (Y) are integrated.

The stampable sheet is not particularly limited in its production method, and is preferably produced by impregnating a mat made of the inorganic fibers (Y) (inorganic fiber mat) with the thermoplastic resin composition (X) or the PP composition. Examples of the impregnation method include a method of applying the thermoplastic composition or the PP composition to the inorganic fiber mat (Y), a method of preparing a sheet of the thermoplastic resin composition or the PP composition (hereinafter, sometimes referred to as "thermoplastic resin sheet" or "PP sheet"), laminating the thermoplastic resin sheet or the PP sheet on the inorganic fiber mat, and heating and melting the thermoplastic resin sheet or the PP sheet to impregnate the inorganic fiber mat.

In the present invention, from the viewpoint of the impregnation property of the resin of the stampable sheet into the fibers, a method of laminating the thermoplastic resin sheet or the PP sheet on the inorganic fiber mat and heating and melting the thermoplastic resin sheet or the PP sheet is preferred. In particular, a laminate can be obtained by laminating the inorganic fiber mat between two thermoplastic resin sheets or PP sheets, then heating and pressurizing the laminate, and then cooling and solidifying the laminate.

Here, the thickness of the thermoplastic resin sheet or the PP sheet is not particularly limited as long as it is within a range in which the fiber mat can be impregnated well.

### (Inorganic Fiber Mat)

The form of the inorganic fibers used in the method for producing the stampable sheet is not particularly limited, those having various forms can be used, and those formed into a mat shape or a sheet shape are preferable.

More specifically, a mat formed of glass fibers (hereinafter referred to as "glass fiber mat") and a mat formed of metal oxide fibers represented by alumina fibers (hereinafter referred to as "metal oxide mat") are preferable.

The basis weight (mass per unit area) of the inorganic fiber mat is not particularly limited and is appropriately determined depending on the application, but is preferably 300 g/m² or more, more preferably more than 800 g/m², and more preferably more than 1500 g/m². In addition, the basis weight of the inorganic fiber mat is not particularly limited, and is preferably 5000 g/m² or less, more preferably 4500 g/m² or less, still more preferably 4000 g/m² or less, and particularly preferably 3500 g/m² or less.

The basis weight (basis weight) per unit area of the inorganic fiber mat can be adjusted to the above range by adjusting the amount of fibers per unit area when the inorganic fiber aggregate constituting the inorganic fiber mat is laminated by a folding device. In addition, the inorganic fiber mat of the present invention may have a configuration in which a plurality of inorganic fiber mats are adhered or may have a single configuration, but it is preferable that the inorganic fiber mat has a single configuration in view of handleability and peeling strength at the bonding interface.

### (Glass Fiber Mat)

Examples of the form of the glass fiber mat used in the present invention include felt and blanket processed from short fiber glass cotton, chopped strand mat processed from continuous glass fibers, swirl (swirl-like) mat of continuous glass fibers, and unidirectionally aligned mat. Among these, it is preferable to use a glass fiber mat obtained by needle-punching a swirl (swirl-like) mat of continuous glass fibers because the strength and impact resistance of the stampable sheet are excellent.

### (Metal Oxide Fiber Mat)

The metal oxide fiber mat according to the present invention is a mat composed of metal oxide fibers such as alumina fibers and subjected to a needling treatment.

In the method of laminating the thermoplastic resin sheet or the PP sheet on the inorganic fiber mat, followed by heating and melting, the heating temperature is preferably 170 to 300°C. When the heating temperature is 170°C or higher, the fluidity of the polypropylene-based resin is sufficient, the inorganic fiber mat can be sufficiently impregnated with the PP composition, and a suitable stampable sheet can be obtained. On the other hand, when the heating temperature is 300°C or lower, the thermoplastic resin composition or the PP composition is not deteriorated.

Further, the applied pressure is preferably 0.1 to 1 MPa. When the applied pressure is 0.1 MPa or more, the inorganic fiber mat can be sufficiently impregnated with the thermoplastic resin composition or the PP composition, and a suitable stampable sheet can be obtained. On the other hand, when the applied pressure is 1 MPa or less, the thermoplastic resin composition or the PP composition flows, and burrs are not generated.

In addition, the temperature at the time of cooling is not particularly limited as long as it is equal to or lower than the freezing point of the thermoplastic resin in the thermoplastic resin composition or the PP composition, and when the cooling temperature is 80°C or lower, the obtained stampable sheet is not deformed when being taken out. From the above viewpoint, the cooling temperature is preferably room temperature to 80°C.

Examples of the method of heating, pressurizing, and cooling the laminate to obtain a stampable sheet include a method of press-molding the laminate in a mold equipped with a heating device and laminate processing of heating and pressurizing the laminate by passing the laminate between two pairs of rollers equipped with a heating device, and in particular, the laminate processing is preferable because continuous production can be performed and productivity is high.

### <Thickness of Stampable Sheet>

The thickness of the stampable sheet that can be suitably used in the production of the laminate of the present invention is usually 1 to 10 mm, and preferably 2 to 5 mm. In a case where the thickness of the stampable sheet is 1 mm or more, the stampable sheet can be easily produced. On the other hand, in a case where the thickness of the stampable sheet is 10 mm or less, pre-heating for a long time is not required at the time of processing the stampable sheet by stamping molding or the like, and good molding processability can be obtained.

### <Layer (B)>

The laminate of the present invention includes the layer (B) having a higher thermal conductivity in the thickness direction than the layer (A). The layer (B) may have a thermal conductivity higher than that of the layer (A) in the thickness direction, and is not particularly limited, and a metal layer which is a material having a high thermal conductivity is preferable.

<Metal Layer>

The metal layer has a high thermal conductivity, and can facilitate heat dissipation from the laminate of the present invention to keep the temperature of the back surface of the layer (A) of the laminate low.

Examples of the material of the metal layer include various steel materials, stainless steel materials, titanium materials, and aluminum materials (including aluminum alloys) in terms of thermal conductivity. The thickness of the metal layer is not particularly limited as long as the effects of the present invention are exhibited, and is preferably in a range of 0.05 to 2.0 mm and more preferably in a range of 0.1 to 1.0 mm.

It is also preferable that the laminate of the present invention has an adhesive layer between the metal layers which are the layer (A) and the layer (B) of the laminate. As the adhesive layer, a commercially available adhesive film or the like can be used, but an adhesive layer formed of a thermoplastic resin is preferable. Such an adhesive layer can be formed, for example, by disposing a commercially available hot-melt film or the like between the stampable sheet for forming the layer (A) and the metal layer, followed by heating and pressing. As an embodiment other than the hot-melt film, the layer (A) and the layer (B) of the laminate may be adhered via a conventionally known double-sided pressure-sensitive adhesive tape.

The thickness of the adhesive layer is not particularly limited as long as it is within the range in which the effects of the present invention are exhibited, and in the case of a hot-melt film, the thickness is preferably in a range of 10 to 50 µm, and more preferably in a range of 20 to 40 µm. In the case of a double-sided pressure-sensitive adhesive tape, the thickness is preferably in a range of 0.025 to 2 mm.

As a method of laminating the metal layers which are the layer (A) and the layer (B) of the laminate, an adhesive layer may not be interposed.

### (Application)

Examples of applications of the laminate of the present invention include various parts in the industrial field such as automobile parts and electrical and electronic equipment parts. In particular, since the fiber-reinforced resin composite material of the present invention is excellent in strength, rigidity, and conductivity, and is also excellent in processability, , the fiber-reinforced resin composite material can be suitably used for applications requiring these performances in well balanced and higher manner , for example, various housings and casings such as a battery case.

The battery is not particularly limited, and examples thereof include secondary batteries such as a lithium ion battery, a nickel-hydrogen battery, a lithium-sulfur battery, a nickel-cadmium battery, a nickel-iron battery, a nickel-zinc battery, a sodium-sulfur battery, a lead storage battery, and an air battery. Among these, a lithium ion battery is preferable, and in particular, the stampable sheet or laminate of the present invention is suitably used as a battery housing for suppressing thermal runaway of a lithium ion battery.

### Examples

Hereinafter, the present invention will be described in detail with reference to Examples, but the present invention is not limited to these Examples.

### 1. Evaluation of Flame Shielding Property

For the sheet prepared in each of Examples and Comparative Examples, a flame of a burner at 1300°C was applied from one surface, and it was evaluated whether the flame penetrated after 15 minutes. The distance from the nozzle of the burner to the sample was 160 mm, and the flame front surface was set to 1200°C. The flame front temperature was confirmed with a thermocouple thermometer.

### 2. Evaluation of Heat Insulating Property

In the flame shielding property evaluation described in 1. above, the temperature of the surface (back surface) of the test piece opposite to the surface to which the flame of the burner was applied was measured by a non-contact type radiation thermometer ("FT-H50K" manufactured by KEYENCE CORPORATION). The measuring area is φ35 mm. The position of the center of the measuring area was visually set to be in the vicinity of a position directly above the position of the flame of the burner. Table 1 shows the maximum arrival temperature (°C) of the back surface until 600 seconds elapsed.

### 3. Evaluation of Thermal Conductivity

The thermal conductivity was measured by a method in accordance with ASTM E1530 using a steady method thermal conductivity measurement system (GH-1, manufactured by ADVANCE RIKO, Inc.). The measurement conditions are shown below.
Measurement temperature: 30°C (temperature difference between upper and lower: 24°C)
Measurement sample size: 50 mm square
Measurement direction: thickness direction (resin side is arranged on the upper surface, and metal plate is provided on the lower surface side)

### (Materials Used)

### 1. Polypropylene-Based Resin (Component a)

"NOVATEC PP SA06GA" (melt flow rate: 60 g/10 min) manufactured by Japan Polypropylene Corporation was used.

### 2. Thermally Expandable Flame Retardant (Component b1)

Phosphorus-based flame retardant composition (manufactured by ADEKA Corporation, ADK STAB FP-2500S, containing 50% to 60% by mass of piperazine pyrophosphate, 35% to 45% by mass of melamine pyrophosphate, and 3% to 6% by mass of zinc oxide with respect to the total mass of the phosphorus-based flame retardant composition)

### 3. Copolymer (Component c)

α-Olefin-maleic anhydride copolymer (manufactured by Mitsubishi Chemical Corporation, DIACARNA 30M, weight-average molecular weight: 7,800).

### 4. Metal Hydroxide-Based Flame Retardant (Component d)

Magnesium hydroxide (particle diameter: 4 µm)

### 5. Fluorine-Based Drip Preventing Agent (Component e)

METABLEN (registered trademark) manufactured by Mitsubishi Chemical Corporation, A type grade name "MZX-4" (master batch of PP/A-3000 = 80/20) *master batch of PTFE

### 6. Glass Fiber Mat (Component Y)

A glass fiber mat obtained by needle-punching a swirl (swirl-like) mat (basis weight of 880 g/m²) produced from a continuous glass fiber (fiber diameter of 23 µm) of roving was used.

### 7. Material of Metal Layer

Metal plate 1: Iron plate (equivalent to SPCC) 0.3 mm
Metal plate 2: Aluminum plate (A1100) 0.3 mm
Metal plate 3: Copper plate (C1100) 0.3 mm
Metal plate 4: Stainless steel plate (SUS304) 0.3 mm

### 8. Material of Adhesive Layer

Adhesive film 1: hot melt film "KuranBeter (registered trademark) P-6700" manufactured by KURABO INDUSTRIES LTD., thickness of 30 µm

### Preparation Example 1 (Preparation of PP Composition 1)

68% by mass of the component a, 30% by mass of the component b1, and 2% by mass of the component c were melt-kneaded (at 230°C) to prepare pellets of a polypropylene-based resin composition (resin composition (X)).

### Preparation Example 2 (Preparation of PP Composition 2-1)

48% by mass of the component a, 20% by mass of the component b, 2% by mass of the component c, and 30% by mass of the component d were melt-kneaded (at 230°C) to prepare pellets of a polypropylene-based resin composition (resin composition (Y1)).

### Preparation Example 3 (Preparation of PP Composition 2-2)

58% by mass of the component a, 20% by mass of the component b, 2% by mass of the component c, and 20% by mass of the component d were melt-kneaded (at 230°C) to prepare pellets of a polypropylene-based resin composition (resin composition (Y2)).

### Preparation Example 4 (Preparation of PP Composition 2-3)

58% by mass of the component a, 10% by mass of the component b, 2% by mass of the component c, and 30% by mass of the component d were melt-kneaded (at 230°C) to prepare pellets of a polypropylene-based resin composition (resin composition (Y3)).

### Preparation Example 5 (Preparation of PP Composition 3-1)

77.8% by mass of the component a, 20% by mass of the component b, 2% by mass of the component c, and 0.2% by mass of the component e were melt-kneaded (at 230°C) to prepare pellets of a polypropylene-based resin composition (resin composition (Z1)).

### Preparation Example 6 (Preparation of PP Composition 3-2)

82.8% by mass of the component a, 15% by mass of the component b, 2% by mass of the component c, and 0.2% by mass of the component e were melt-kneaded (at 230°C) to prepare pellets of a polypropylene-based resin composition (resin composition (Z2)).

### Comparative Preparation Example 1

Pellets of a polypropylene-based resin composition (PP composition) were prepared in the same manner as in Preparation Example 1 except that the component b1 and the component c were not used.

### Example 1 (First Aspect)

A method for producing a resin sheet (stampable sheet 10) for forming the layer (A) in the laminate of the present invention will be described below with reference to Fig. 1. Note that Fig. 1 shows a layer structure before the glass fiber mat is impregnated with the thermoplastic resin composition.

The pellets of the resin composition (X) granulated in Preparation Example 1 were placed in an extruder, melted, and then extruded into a sheet shape, and the glass fiber mat 12 was laminated on the extruded sheet-shaped thermoplastic resin composition (X) (hereinafter referred to as "sheet X"; 11 in Fig. 1) by sandwiching the glass fiber mat 12 from both sides. Next, the sheet X was laminated on both surfaces (13 in Fig. 1), heated and pressurized at 230°C for 4 minutes while applying a pressure of 0.3 MPa using a laminator, and then cooled and solidified to obtain a resin sheet (stampable sheet, thickness: 2.5 mm) (see Fig. 1). The resin composition in the sheet X was impregnated into the glass fiber mat to obtain an integrated resin sheet (stampable sheet, described as "integrated sheet" in Table 1).

Next, the adhesive film 1 was sandwiched and laminated between the integrated sheet and the metal plate 1, and heated and pressurized at 230°C for 90 seconds to obtain a laminate in which the sheet and the metal plate 1 were adhered to each other. The results of evaluation by the above method are shown in Table 1.

### Example 2 (First Aspect)

A laminate in which the integrated sheet and the metal plate 2 were adhered to each other was obtained in the same manner as in Example 1 except that the metal plate 2 was used as the metal plate instead of the metal plate 1. The constitution and the results of evaluation by the above method are shown in Table 1.

### Example 3

A sheet in which the glass fiber mat and the resin composition (X) were integrated was obtained in the same manner as in Example 1.

Next, a laminate was obtained by laminating the sheet and the metal plate 3. The results of evaluation by the above method are shown in Table 1.

### Example 4

A laminate in which the sheet and the metal plate 4 were laminated was obtained in the same manner as in Example 3 except that the metal plate 4 was used as the metal plate instead of the metal plate 3. The results of evaluation by the above method are shown in Table 1.

### Comparative Example 1

Table 1 shows the results of evaluating only the resin sheet (integrated sheet, stampable sheet) produced in Example 1.

### Example 5 (Second Aspect)

The resin sheet (stampable sheet, thickness: 2.5 mm) produced in Example 1 was evaluated by the above method. The results are shown in Table 2.

### Example 6 (Second Aspect)

A stampable sheet (thickness: 2.5 mm) was obtained in the same manner as in Example 1, except that the resin composition (Y1) prepared in Preparation Example 2 was used instead of the resin composition (X) granulated in Preparation Example 1. The resin composition (Y1) was impregnated into the glass fiber mat to obtain an integrated sheet. The results of evaluation by the above method are shown in Table 2.

### Example 7 (Second Aspect)

A stampable sheet (thickness: 2.5 mm) was obtained in the same manner as in Example 1, except that the resin composition (Y2) prepared in Preparation Example 3 was used instead of the pellets of the resin composition (X) granulated in Preparation Example 1. The resin composition (Y2) was impregnated into the glass fiber mat to obtain an integrated sheet. The results of evaluation by the above method are shown in Table 2.

### Example 8 (Second Aspect)

A stampable sheet (thickness: 2.5 mm) was obtained in the same manner as in Example 1, except that the resin composition (Y3) prepared in Preparation Example 4 was used instead of the pellets of the resin composition (X) granulated in Preparation Example 1. The resin composition (Y3) was impregnated into the glass fiber mat to obtain an integrated sheet. The results of evaluation by the above method are shown in Table 2.

### Example 9 (Second Aspect)

A stampable sheet (thickness: 2.5 mm) was obtained in the same manner as in Example 1, except that the resin composition (Z1) prepared in Preparation Example 5 was used instead of the pellets of the resin composition (X) granulated in Preparation Example 1. The resin composition (Z1) was impregnated into the glass fiber mat to obtain an integrated sheet. The results of evaluation by the above method are shown in Table 2.

### Example 10 (Second Aspect)

A stampable sheet (thickness: 2.5 mm) was obtained in the same manner as in Example 1, except that the resin composition (Z2) prepared in Preparation Example 6 was used instead of the pellets of the resin composition (X) granulated in Preparation Example 1. The resin composition (Z2) was impregnated into the glass fiber mat to obtain an integrated sheet. The results of evaluation by the above method are shown in Table 2.

### Comparative Example 2

A sheet was obtained in the same manner as in Example 1, except that the pellets of the PP composition granulated in Comparative Preparation Example 1 were used instead of the pellets of the PP composition granulated in Preparation Example 1. The constitution and the evaluation results are shown in Table 2.

**Table 1**

| | Constitution of laminate | | | | | |
|---|---|---|---|---|---|---|
| | Molded body thickness (mm) | Layer structure | Metal plate weight (wt%) | Glass fiber weight (wt%) | Resin weight (wt%) | Flame retardant weight (wt%) in resin |
| Example 1 | 2.5 | Integrated sheet/ metal plate 1 | 45 | 20 | 35 | 30 |
| Example 2 | 2.5 | Integrated sheet/ metal plate 2 | 20 | 30 | 50 | 30 |
| Example 3 | 2.5 | Integrated sheet/ metal plate 3 | 65 | 30 | 50 | 30 |
| Example 4 | 2.5 | Integrated sheet/ metal plate 4 | 45 | 20 | 35 | 30 |
| Comparative Example 1 | 2.5 | Integrated sheet only | 0 | 35 | 65 | 30 |

**Table 1 (continued)**

| | Thermal conductivity (W/mk) | Flame shielding test | | |
|---|---|---|---|---|
| | | Flame contact surface of flame shielding test | Flame shielding property (presence or absence of penetration) | Maximum temperature up to 600 seconds (°C) |
| Example 1 | 0.38 | Sheet side | Not penetrating | 210 |
| Example 2 | 0.37 | Sheet side | Not penetrating | 275 |
| Example 3 | - | Sheet side | Not penetrating | 213 |
| Example 4 | - | Sheet side | Not penetrating | 276 |
| Comparative Example 1 | 0.31 | Sheet side | Not penetrating | 787 |

**Table 2**

| | Composition | | | | |
|---|---|---|---|---|---|
| | Glass fiber weight (wt%) | Resin weight (wt%) | FP content (wt%) in resin | Magnesium hydroxide content (wt%) in resin | PTFE content (wt%) in resin |
| Example 5 | 35 | 65 | 30 | 0 | 0 |
| Example 6 | 32 | 68 | 20 | 30 | 0 |
| Example 7 | 33 | 67 | 20 | 20 | 0 |
| Example 8 | 33 | 67 | 10 | 30 | 0 |
| Example 9 | 37 | 63 | 20 | 0 | 0.2 |
| Example 10 | 37 | 63 | 15 | 0 | 0.2 |
| Comparative Example 2 | 35 | 65 | 0 | 0 | 0 |

**Table 2 (continued)**

| | Evaluation | |
|---|---|---|
| | Flame shielding property (presence or absence of penetration) | Maximum temperature up to 600 seconds (°C) |
| Example 5 | Not penetrating | 423 |
| Example 6 | Not penetrating | 442 |
| Example 7 | Not penetrating | 452 |
| Example 8 | Not penetrating | 447 |
| Example 9 | Not penetrating | 431 |
| Example 10 | Not penetrating | 467 |
| Comparative Example 2 | Penetration | Cannot be evaluated |

As shown in Examples 1 to 4 which were the first aspects, the laminate of the present invention had excellent flame shielding property, and the flame was blocked even at the time point when 600 seconds (10 minutes) elapsed. In addition, an increase in the maximum attainable temperature of the back surface up to the time point when 600 seconds (10 minutes) elapsed was lower than 300°C, and the laminate had excellent heat insulating property. In contrast, in Comparative Example 1, the effect of suppressing an increase in the maximum attainable temperature of the back surface was low, and the heat insulating property was poor.

In addition, in Examples 5 to 10 which were the second aspects, as shown in Table 2, the stampable sheet which was one aspect of the present invention had excellent flame shielding property, and the flame was blocked even at the time point at which 15 minutes had elapsed. In addition, an increase in the back surface temperature at the time of 600 seconds (10 minutes) was suppressed, and the heat insulating property was excellent. In contrast, in Comparative Example 2, the flame penetrated to the back surface in about 140 seconds.

### Industrial Applicability

The laminate of the present invention has high flame shielding property and heat insulating property, and therefore is useful as a material for various industrial parts required to have high safety, such as aircrafts, ships, automobile parts, electrical and electronic equipment parts, and building materials. In particular, it can be suitably used for various housings and casings of batteries in which metals have been conventionally used, and it is expected to contribute to safety of automobiles, improve energy efficiency by weight reduction, reduce CO₂ emissions, and the like.

### Reference Signs List

10: Stampable sheet
11: PP sheet
12: Glass fiber mat
13: PP sheet

## Claims

1. A laminate comprising: a layer (A) in which a thermoplastic resin composition (X) and inorganic fibers (Y) are integrated; and a layer (B) having a higher thermal conductivity in the thickness direction than the layer (A), wherein the thermoplastic resin composition (X) comprises a thermoplastic resin (a) and a thermally expandable flame retardant (b1).

2. The laminate according to claim 1, wherein a thermal conductivity measured in a thickness direction of the laminate is 0.32 W/mK or more.

3. The laminate according to claim 1 or 2, wherein a thermal conductivity measured in a thickness direction of the layer (B) is 10 W/mK to 400 W/mK.

4. The laminate according to claim 1 or 2, wherein the layer (B) comprises a metal layer.

5. The laminate according to claim 4, wherein the metal layer has a thickness of 0.05 to 2.0 mm.

6. The laminate according to claim 1 or 2, wherein the thermoplastic resin composition (X) comprises a polypropylene-based resin.

7. The laminate according to claim 1 or 2, wherein the thermoplastic resin composition (X) comprises a copolymer of an α-olefin and an unsaturated carboxylic acid.

8. The laminate according to claim 1 or 2, wherein the thermally expandable flame retardant (b1) comprises a phosphorus-based flame retardant.

9. The laminate according to claim 8, wherein the phosphorus-based flame retardant comprises a compound having a melamine structure or a piperazine structure.

10. The laminate according to claim 1 or 2, wherein the inorganic fibers (Y) comprise glass fibers.

11. The laminate according to claim 1 or 2, wherein the mat made of the inorganic fibers (Y) is impregnated with the thermoplastic resin composition (X).

12. The laminate according to claim 1 or 2, wherein the thermoplastic resin composition (X) comprises zinc oxide.

13. A method for producing a laminate, comprising a step of impregnating a mat made of inorganic fibers (Y) with a thermoplastic resin composition (X) to produce an integrated layer (A); and a step of laminating a layer (B) having a higher thermal conductivity in the thickness direction than the layer (A) on the integrated layer (A).

14. The method for producing a laminate according to claim 13, wherein the step of producing the integrated layer (A) comprises laminating a mat made of inorganic fibers (Y) and a resin sheet made of a thermoplastic resin composition (X) and hot-pressing the laminate.

15. The method according to claim 13 or 14, wherein the layer (B) comprises a metal layer.

16. A housing or a casing using the laminate according to claim 1 or 2.
